(19) **Europäisches Patentamt**
**European Patent Office**
**Office européen des brevets**

(11) **EP 2 025 246 B1**

(12) **EUROPEAN PATENT SPECIFICATION**

(45) Date of publication and mention
of the grant of the patent:
**16.01.2013 Bulletin 2013/03**

(51) Int Cl.:
*A23L 1/00* (2006.01)     *A23G 3/52* (2006.01)
*A23C 9/15* (2006.01)     *A23C 23/00* (2006.01)
*A23C 9/154* (2006.01)     *A23L 1/0528* (2006.01)
*A23L 1/0562* (2006.01)     *A23G 3/44* (2006.01)
*A23G 3/42* (2006.01)

(21) Application number: **07113785.5**

(22) Date of filing: **03.08.2007**

(54) **Multi-component dessert product**

Dessertprodukt aus mehreren Komponenten

Produit de dessert multi composant

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**18.02.2009 Bulletin 2009/08**

(73) Proprietor: **Campina Nederland Holding B.V.
5301 LB Zaltbommel (NL)**

(72) Inventors:
• **Eisner, Matthias Dominik
6712 HH Ede (NL)**
• **Van de Ven, Martinus Johannes Maria
6671 GK Zetten (NL)**

(74) Representative: **Swinkels, Bart Willem
Nederlandsch Octrooibureau
P.O. Box 29720
2502 LS Den Haag (NL)**

(56) References cited:
**EP-A- 0 928 560     EP-A- 0 970 618
EP-A- 1 348 340     EP-A- 1 570 746
EP-A- 1 597 975     US-A1- 2003 113 436**

• **DATABASE CAPLUS [Online] CHEMICAL
ABSTRACTS SERVICE, COLUMBUS, OHIO, US;
XP002470854 retrieved from STN Database
accession no. 2006:716766 & CN 1 672 540 A
(SHIJIAZHUANG SANLU GROUP CO.) 28
September 2005 (2005-09-28)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

The present invention relates to a method for preparing a dessert product, to a food composition for a dessert product, to a dessert product, and especially to a multi-component dessert product.

BACKGROUND OF THE INVENTION

Multi-component dessert products are known in the art. For example, EP-A-0928560 teaches a chilled ready-made dessert, consisting of two or more viscous to pasty or gelatinous food components, which can be filled into a container in a complex shape without mixing. It is focused on achieving optically and/or taste-wise appealing food products. In an embodiment, EP-A-0928560 teaches a two-component ready-to-eat dessert, wherein the first component is provided by a yoghurt cream, and wherein the second component is provided by a paste-like fruit preparation. Furthermore, it is taught that the required minimal viscosities of the food components can be obtained by the addition of structuring and/or gelling agents.

EP1728440 relates to a dessert comprising a first food component with a water activity of at least 0.7 and a barrier layer that is in contact with the first food component. The barrier layer, containing a water-in-oil emulsion, is free from defects and can thus be so thin that - if desired - the layer is imperceptible visually and/or organoleptically for the consumer. The dessert preferably has a second food component, wherein the barrier layer is situated between the first and the second food component. In one example, a thin layer of caramel sauce, chocolate sauce or a fruit preparation is filled into a portion beaker. A thin layer of the barrier layer is applied to this layer, and a layer of fresh vanilla custard is then applied on top of this.

EP1570746 discloses a frozen aerated packaged ice confection that is resistant to shrinkage, comprising water, fat, polyol, vegetable fibre, sugar, milk protein hydrocolloids and emulsifier.

US2003113436 describes freeze-dried ice-cream comprising cream, milk, polyol (erythritol), inulin, egg yolk, processed soy material and water.

EP0970618 discloses a dessert cream, that is devoid of sugar, comprising milk, wheat flour, pure milk proteins, one or more natural ingredients selected from egg yolk, chocolate, cocoa, coffee, natural extracts from vanilla berries, essential lemon oil, hazelnut and almond flavours and fruit of varying typologies, fructose, one or more fructooligosaccharides and optionally live and viable lactic bacteria at a high concentration, milk cream and/or isomalt.

EP1597975 describes a frozen confection comprising fat, sweetener (e.g. inulin), milk solids-not-fat and water, in which an emulsifier is used comprising propylene glycol monoester of fatty acid.

EP1348340 discloses a dairy product in a pot comprising at least two components, at least one of which is a dairy base, wherein the dairy base is yoghurt, a flan base or a fresh cheese and/or the other component is a fruit-containing or fruit-flavor containing base.

CN 1672540 describes a milk powder composition compriing fresh milk, desalted whey powder, whey protein powder, defatted milk powder, malt dextrin, sugar, lentinan extract, inulin, sunflower seed salad oil, chromium picolinate, lecithin and glycerine octyl caprate.

SUMMARY OF THE INVENTION

It is an object of the present invention to provide an alternative multi-component dessert product having pleasant organoleptic properties.

Thus, in a first aspect, the present invention provides a container containing a multi-component dessert product comprising a first and a second dessert product, wherein the first dessert product comprises a food composition for a dessert product, the food composition comprising

     a. 10-40% (w/w) of fat,
     b. 0.5-8% (w/w) of non-globular protein,
     c. 5-15% (w/w) of inulin, and
     d. 45-80% (w/w) of water,

wherein the weight ratio of fat : non-globular protein ranges between 5:1 - 20:1, and wherein at least part of the inulin is undissolved, wherein the second dessert product comprises one or more dessert products selected from the group consisting of a yoghurt, a quark, a pudding, a custard, a mousse, a bavaroise, a fruit composition, a whipped cream and a crème fraiche.

Advantageously, the multi-component dessert product thus obtained has favourable organoleptic properties, and especially the first dessert product has a good mouthfeel, particularly a pleasant texture.

It appears that this food composition having a weight ratio of fat : non-globular protein of preferably between 5:1 and 20:1, preferably of between 11:1 - 20:1, even more preferably of between 12:1 - 20:1 is advantageous in view of adequate filling viscosity, mouthfeel and stability of the food composition. Advantageously, the first dessert product, or the food composition for the dessert product, has a pleasant, paste-like texture.

In another aspect, the present invention also provides for a method for preparing a multi-component dessert product, the multi-component dessert product comprising a first and a second dessert product, the method comprising:

    a. mixing ingredients to obtain a food composition comprising:

        i. 10-40% (w/w) of fat,
        ii. 0.5-8% (w/w) of non-globular protein,
        iii. 5-15% (w/w) of inulin, and
        iv. 45-80% (w/w) of water,

    wherein the weight ratio of fat : non-globular protein preferably ranges between 5:1 - 20:1;
    b. heating the composition thus obtained to a temperature between about 70 and 150 °C;
    c. cooling the liquid thus obtained to about 0-35 °C;
    d. filling the first dessert product thus obtained together with a second dessert product, wherein the second dessert product preferably has a temperature of 0-35 °C, more preferably of 7-25 °C, more preferably to 4-15 °C, especially to about 7 °C, and wherein the second dessert product preferably has a filling viscosity > 30 mPa.s, more preferably > 1 Pa.s, more preferably > 5 Pa.s.

Advantageously, the method provides for a multi-component dessert product wherein especially the first dessert product has a good mouthfeel, and wherein excessive warming up of the second food product during filling is prevented. In one aspect, the cooling process (c.) prevents that the hot composition obtained under (b.) would come into direct contact with the second dessert product (which is preferably cooled to about 0-35 °C during filling). This may be advantageous for the organoleptic properties of the first dessert product, since too fast cooling of the first dessert product may lead to the formation of large inulin particles, especially large inulin crystals, which could cause a sandy mouthfeel to occur in the first dessert product.

In an embodiment, the cooling process (c.) is such that the liquid under (c.) does not reach a temperature of below 5 °C immediately after heating under (b.). Likewise, the occurrence of a sandy mouthfeel of the first dessert product is reduced or even prevented.

In an embodiment, the method comprises homogenising the composition obtained under (a.) and/or the product obtained under (b.), wherein homogenising is performed at a temperature of 30-80 °C and a pressure of at least 40 bar and preferably takes place in one pass. The homogenisation step may advantageously enhance the filling viscosity and/or the firmness of the first dessert product obtained under (c.).

In an embodiment, the method comprises cooling the liquid obtained under (b.) to 0-35 °C, more preferably to 5-30 °C, more preferably to 7-25 °C, more preferably to 7-15 °C, more preferably 7 °C, preferably until the first dessert product obtained under (c.) has a filling viscosity of between 5 and 100, especially between 10 and 50 Pa.s. Given the filling viscosity of the second dessert product, which preferably exceeds about 30 mPa.s, more preferably about 1 Pa.s, it has been found that it is particularly advantageous for the first dessert product to have a minimum filling viscosity of at least 5 Pa.s, preferably of at least 10 Pa.s. Accordingly, the first and the second dessert product remain essentially unmixed after filling of the container, even when the dessert products are filled in a spatially complex form, which complex form can for example be obtained by using nozzles for filling the dessert products, as for example described in DE10346193 (Wagenrad nozzle) or EP1602579 (Strudel nozzle). Advantageously, discrete domains of the first dessert product, and preferably additionally of the second dessert product, are obtained in which domains the dessert product remains as a separate phase. Preferably, after filling, the first dessert product is present in one or more domains each having a volume of at least 5 mm$^3$. Further preferably, the one or more domains are one or more strands.

Preferably, the maximum filling viscosity of the first and/or of the second dessert product is 100 Pa.s, preferably 50 Pa.s. If the filling viscosity is higher, pumpability of the dessert product becomes increasingly difficult, which leads to efficiency losses of the method.

The present invention also provides for a food composition *per se*, for a food composition for a dessert product *per se*, for a method for preparing such food compositions, for a container containing the dessert product, for a container containing the multi-component dessert product, for a method for preparing the dessert product, and for a powder for preparing the food composition for a dessert product.

DRAWINGS

Figure 1 shows the influence of the cooling time on the filling viscosity at 7 °C of the first dessert product.; open diamond: warm (50°C; viscosity as function of time at warm conditions is almost constant).
Figure 2 shows the influence of fat content on filling viscosity at 7 °C and firmness at 7 °C of the first dessert product. Filled diamonds: firmness; open squares: filling viscosity.
Figure 3 shows the influence of cocoa powder content on firmness at 7 °C of the first dessert product. The cocoa powder used was type 10/12 SR7 and was obtained from Schokinag Schokolade-Industrie, Mannheim, Germany.
Figure 4 shows a container containing a multi-component dessert product as obtained using a Wagenrad nozzle. Discrete domains of the first dessert product are clearly visible as the strands having the darkest colour.

DETAILED DESCRIPTION OF THE INVENTION

Definitions and conventions

In this specification, a weight percentage of a component in a composition, expressed as % (w/w) or as wt.% or as wt%, refers to the weight of the component expressed as a percentage of the total weight of the composition, unless indicated otherwise.

A non-globular protein is a protein which is not compactly coiled and folded into more or less spherical or ellipsoidal units. The term "non-globular protein" is known to the person skilled in the art. The non-globular protein according to the present invention is preferably a non-globular dairy protein, preferably a non-globular dairy protein present in milk, preferably cow's milk. Skimmed cow's milk typically contains about 2.6-2.8 % (w/w) of non-globular protein (mainly caseins and/or caseinates), and typically about 0.6-0.7 % (w/w) of globular protein (mainly whey proteins). Cream having a fat content of 40 % (w/w) typically contains about 1.6 % (w/w) of non-globular protein (mainly caseins and/or caseinates and a fat globule membrane protein); about 1.8% by weight of the fat fraction in cream is comprised by the fat globule membrane protein. Typically about 80 % (w/w) of the protein present in (skimmed) cow's milk or in cream is non-globular protein. See also: P. Walstra and R. Jenness, Dairy Chemistry and Physics, Wiley, 1984, Ch. 6.

A structuring agent is an additive which enhances the viscosity of the food composition. The term "structuring agent" is known to the person skilled in the art. Examples of preferred structuring agents include hydrocolloids such as carrageenans, galactomannans, pectins, and the like. Starches and/or modified starches are less preferred structuring agents. Inulin is not considered a structuring agent in the present invention.

Inulin is an oligomer or polymer which is mainly comprised of fructose units joined by a $\beta$-(2-1) glycosidic link. The inulin oligomer molecule or polymer molecule typically has a terminal glucose. An inulin molecule contains at least 2 fructose units and 1 glucose unit, or at least 3 fructose units. The number of fructose units in an inulin molecule is referred to as the degree of polymerisation of the inulin molecule (DP). Preferably, the inulin used in the present invention is obtained from a natural source, preferably from a plant, especially from but not limited to chicory. Commercially available inulin usually comprises a certain amount of mono- and/or disaccharides, such as fructose. Said mono- and/or disaccharides are not considered to be inulin in the present invention.

Fibres are natural particulate materials other than inulin, which particulate materials are largely insoluble in water. Examples of fibres include pea fibre and fruit fibre. Also vanilla bean powder and cocoa powder are considered fibres in the present invention. Such materials can be applied as non-inulin additive particles in the food composition (or (first) dessert product) of the invention. Such materials preferably have a volume-surface averaged particle size smaller than 50 $\mu$m. More preferably, such materials have a maximum particle size, preferably in one or more dimensions, more preferably in all dimensions, of less than 50 $\mu$m. Non-inulin additive particles, such as fibres, having a correspondingly small particle size may provide for a food composition having a pleasant, smooth mouthfeel. The particles sizes described here are the particles sizes in the final product, i.e. especially after filling into the container, and especially after some storage time (see below).

Unless otherwise specified herein, the filling viscosity of the food composition or the (first or second) dessert product is defined as its steady shear viscosity directly after its preparation and cooling down to 0-35 °C, preferably to 5-30 °C, more preferably to 7-25 °C, more preferably to 7-15 °C, more preferably to 7 °C, after applying a steady pre-shear for about 30 s at a shear rate of 13.9 s$^{-1}$, and as determined at a shear rate of 13.9 s$^{-1}$ and preferably at the temperature of the dessert product after its preparation and cooling down, especially at about 7 °C. It is the viscosity of the first or the second dessert with which the first or the second product are filled into a container. The filling viscosity is measured as a steady-shear viscosity, preferably using a lab rheometer (for example, a Physica Rheolab MC 1) with a vane geometry at a constant rotational speed of n = 13.9 rpm. Samples may be prepared in 75 mm diameter cylindrical cups filled at least to a height of 50 mm for this purpose. The momentum M is read off after applying a steady pre-shear for 30 s at a shear rate of 13.9 s$^{-1}$ and preferably at about the temperature of the dessert product after its preparation and cooling down (vide supra), especially at about 7 °C, and the filling viscosity is then calculated from the read off momentum M in % as follows:

$$\eta = \frac{\tau}{\dot{\gamma}} = \frac{\tau_{\%0} \cdot M}{K_{\dot{\gamma}} \cdot n}$$

with $K_{\dot{\gamma}}$ = 1,0 min·s$^{-1}$ and $\tau_{\%0}$ = 13,94 Pa, for the vane geometry used.

Unless otherwise specified herein, the firmness of the food composition or the (first or second) dessert product is the final value of the force required to penetrate the food composition to a depth of 18 mm at a speed of 2 mm.s$^{-1}$, wherein the dessert product is filled in a cylindrical cup with a diameter of at least about 75 mm diameter, to a minimum filling height of 40 mm and preferably to a maximum filling height of 50-70 mm, and wherein the dessert product has a temperature of about 7 °C. Herein, the force is expressed in g. This force (expressed in g, for grams) should be divided by 101.9 in order to obtain the force (expressed in N). Firmness values are conveniently obtained using a TA-XT2, Stable Microsystems. In that case, a 25 mm diameter cylindrical geometry is used (as probe) to measure the firmness of the first dessert component, whereas a 38 mm cylindrical geometry (probe) is used to measure the firmness of the second dessert component. The probe (cylinder with herein specified geometry) is penetrated into the (first or second) dessert product until a penetration depth of 18 mm. The final value (in gram) is indicated as firmness.

Unless otherwise specified herein, the viscosity of the food composition or the (first or second) dessert product is its steady shear viscosity as determined by rotational rheometry, preferably using a plate-plate geometry according to DIN 53018-1 under the following conditions:

- a gap width of 2 mm at 25 mm plate diameter,
- a shear rate of 1 s$^{-1}$, and
- preferably a temperature of about 10 °C; and

wherein during 10 s before determining the viscosity a pre-shear is applied at a shear rate of 1 s$^{-1}$ preferably at a temperature of about 10 °C. Here, the viscosity refers to the product filled into the container. The rheometer may be a Physica MCR 300. The viscosity correlates well with the firmness.

In one aspect, the food composition for a dessert product according to the present invention is a food composition *per se,* or equivalently, a food composition for a dessert product *per se.* Thus, for example, the food composition may be suitable for a spread or for a dessert product. The food composition for a dessert product according to the present invention is in an embodiment equal to the dessert product according to the present invention. In another aspect, the food composition for a dessert product according to the present invention is part of a multi-component dessert product. In that case, the food composition for a dessert product according to the present invention is indicated as the first dessert product according to the present invention. Hence, in that embodiment, the food composition for the dessert product is in fact a food composition for a first dessert product.

The food composition in all of its aspects, as well as methods for its preparation, will be further described below.


Food composition and food composition for a dessert product

The food composition does not contain less than 10 % (w/w) fat, otherwise the firmness of the food composition may become too low, and the food composition may lose its favourable organoleptic properties, in particular its favourable mouthfeel, and especially its melting properties. If the food composition contains more than 40 % fat, the food composition may lose its favourable organoleptic properties. A fat content of between 15-25 % is preferred in terms of textural properties of the composition, especially firmness and melting properties. In an embodiment, the fat preferably comprises milk fat. In a further preferred embodiment, the fat consists of milk fat.

In an embodiment, the non-globular protein comprises a non-globular milk protein. In a further preferred embodiment, the non-globular consists of non-globular dairy protein, especially a non-globular dairy protein present in or obtainable from cow's milk. In a further preferred embodiment, the non-globular milk protein is selected from the group consisting of a casein, a caseinate and a fat globule membrane protein.

The weight ratio of fat : non-globular protein preferably ranges between 5:1 - 20:1, more preferably between 9:1 and 20:1, more preferably between 10:1 and 20:1, most preferably between 11:1 and 20:1 or between 12:1 and 20:1. Especially if the weight ratio of fat : non-globular protein is reduced to below 5:1, the filling viscosity of the food composition may significantly be reduced, particularly in the absence of structuring agents, and especially in the absence of structuring agents at a concentration exceeding 1 % (w/w). It is preferred that the food composition comprises structuring agents at a concentration lower than 1%, as the presence of structuring agents may negatively influence the organoleptic properties of the food composition, in particular its mouthfeel. If the weight ratio of fat : non-globular protein is above 10: 1, preferably at or above 11:1, 12:1 or higher, the organoleptic properties of the food composition, especially its melting properties (as assessed by sensorial evaluation) of the food composition are particularly favourable. Thus, it is preferred that the weight ratio of fat : non-globular protein is 5:1 or higher, more preferably 11:1, 12:1 or higher. However, if the weight ratio of fat : non-globular is higher than 20:1, then not enough non-globular protein may be present to stabilise the fat, so that the food composition may become unstable. A weight ratio of fat : non-globular protein of between 11:1 or 12:1 and 20:1 is particularly preferred in terms of filling viscosity, organoleptic properties and product stability.

The presence of the at least partially undissolved inulin particles is found to provide the food composition with the required pleasant organoleptic properties, in particular with favourable textural properties, especially with a paste-like character. In order to achieve a certain desired minimal firmness or viscosity, the minimum inulin content of the food composition according to the present invention is 5 %, more preferably 7 %, 8 % or 10 % (w/w). Particularly when stored, and preferably consumed, at a temperature of between 0-35 °C, more preferably between 4-25 °C, more preferably between 4-15 °C, most preferably at 7 °C, the food composition for a dessert product according to the present invention has such favourable textural properties as high firmness, excellent mouthfeel creaminess, excellent melting behaviour, excellent mouthfeel thickness and excellent afterfeel thickness, and excellent afterfeeling fatty. Furthermore, particularly when stored, and preferably consumed, at a temperature of between 0-35 °C, more preferably between 4-25 °C, more preferably between 4-15 °C, the food composition for a dessert product according to the present invention has such favourable textural properties as high viscosity. If the inulin content of the food composition exceeds 15% (w/w), the textural properties of the food composition may become less favourable. For example, the firmness may become too high and/or the mouthfeel diminishes to an unacceptable level.

Without being bound to theory, it is believed that the presence of at least partially undissolved inulin contributes to the formation of an inulin gel, the inulin gel comprising inulin particles, especially inulin crystals which are organised into aggregates, and that most likely, it is the inulin gel which provides for the high firmness of the food composition; cf. Bot et al. Food Hydrocolloids 2004, 18, 547-556.

Thus, preferably, at least part of the inulin is undissolved. In practice, this means that the solubility of the inulin in water should preferably not exceed about 5% (w/w), at a temperature which preferably ranges between 0-35 °C, more preferably between 4-25 °C, most preferably between 4-15 °C, for example at about 7 °C. Further preferably, the solubility of the inulin in water is smaller than 3% (w/w), more preferably smaller than 2%, more preferably smaller than 1%, at a temperature of 7 °C, especially after storage for 3 months at this temperature. Furthermore, at least part of the inulin is preferably present as particles, especially as crystals. Preferably, the inulin particles have a volume-surface average particle size < 3 $\mu$m, more preferably, the volume-surface average particle size of the inulin ranges between 0.05 and 3 $\mu$m. If the inulin particles and/or aggregates thereof are large enough, they may be visualised as Maltese crosses when viewed under a light microscope with crossed polarisers. It has been found that when the food composition according to the present invention shows up as Maltese crosses when viewed under polarised light using a light microscope at a magnification of 200x, then the mouthfeel of said food composition may become sandy as a result of the presence of larger particles. This is less preferred.

It was found that the degree of polymerisation of the inulin influences the firmness of the food composition. The higher the average degree of polymerisation of the inulin, the higher the firmness of the food composition (all other parameters kept equal). Herein, the average degree of polymerisation is preferably specified as a number-averaged degree of polymerisation, or as a weight-average degree of polymerisation, as known to the person skilled in the art. In a preferred embodiment, the inulin is obtained from natural sources. Preferably, the maximum degree of polymerisation of the inulin is 200 or lower. Typically, the maximum degree of polymerisation of the inulin is 140 or lower. Preferably, in an embodiment the inulin has an average degree of polymerisation ≥ 10. According to this embodiment, a preferred commercially available inulin is Raftiline GR, Frutafit IQ or Frutafit HD. In a further preferred embodiment, the inulin has an average degree of polymerisation > 23. This inulin is typically referred to as long-chain inulin. A preferred commercially available long-chain inulin is selected from the group consisting of Raftiline HPX, Frutafit Tex! and Raftiline HP-Gel.

In an embodiment, the food composition has a viscosity of between 50-10000 Pa.s, preferably of between 150-5000 Pa.s. It has been found that the viscosity increases with, for example, increasing fat content of the composition, inulin content of the composition and average degree of polymerisation of the inulin. According to the indicated preferred ranges for the viscosity, the food composition has a preferred texture. Especially within the preferred range of 150-5000 Pa.s, the viscosity is such that the food composition has a pleasantly high firmness whilst still being spoonable.

In an embodiment, the food composition has a minimal firmness of at least 300 g, more preferably of at least 500 g or at least 1000 g. The firmness appears to be proportional to, for example, the fat content of the composition, the inulin content of the composition and the average degree of polymerisation of the inulin. In an embodiment, the maximal firmness of the food composition preferably does not exceed 30000 g, more preferably 10000 g, more preferably 5000 g. Thus, in an embodiment, the food composition has a firmness of 300-30000 g, preferably of 300-10000 g, more preferably of 500-5000 g. According to these preferred ranges, the food composition has preferred textural properties.

Especially within the preferred range of 500-5000 g, the firmness of the food composition is pleasantly high whilst the food composition is still spoonable.

It was found that the firmness of the food composition increases with the content of inulin (see above), but also with the content of non-inulin additive particles. Without being bound to theory, it is believed that non-inulin additive particles further contribute to the seeding of inuline particles making up the inulin gel. Preferably, in an embodiment, the minimal amount of non-inulin additive particles in the food composition is 0.05%, preferably 0.1%, more preferably 1 or 2 % (w/w). In an embodiment, the maximum amount of non-inulin additive particles is preferably 10%, more preferably 7%, more preferably 6%, most preferably 5%. At higher amounts, the mouthfeel of the composition may become less favourable. Thus, in an embodiment, the food composition comprises non-inulin additive particles in an amount of 0.05-10 %, preferably between 0.1-7 %, more preferably between 2-5 % (w/w). It was found that within the indicated preferred ranges, the non-inulin additive particles can be favourably used to increase the formulation flexibility as to reaching the preferred firmness, or viscosity of the food composition, for example with respect to the inulin and/or fat content of the composition, without compromising on the mouthfeel of the composition.

In an embodiment, the non-inulin additive particles have an average particle size < 50 $\mu$m, preferably < 30 $\mu$m or <20 $\mu$m. If the average particle size exceeds the preferred maximum value, the food composition may be provided with a sandy mouthfeel, which is generally less preferred. In an embodiment, the non-inulin additive particles have a minimum average particle size of at least 100 nm, preferably of at least 500 nm or 1 $\mu$m. Advantageously, the non-inulin additive particles having the corresponding minimum particle size most favourably contribute to the firmness or viscosity of the food composition. Without being bound to theory, it is believed that if the minimum particle size of the non-inulin additive particles is smaller, they contribute less effectively to seeding the crystallisation of the inulin and hence they contribute less effectively to the formation of a stiff inulin-based gel. The average particle size is preferably obtained as a volume-surface averaged particle size. The particles sizes described here are the particles sizes in the final product, i.e. especially after filling into the container, and especially after some storage time (see below).

In an embodiment, the non-inulin additive particles comprise or consist of fibres. In an embodiment the non-inulin additive particles are preferably selected from the group consisting of cocoa powder and vanilla bean powder. If the non-inulin additive particles are cocoa powder, depending on the type of cocoa, the pH is influenced. Hence, in an embodiment, the pH of the food composition is preferably adjusted to pH > 6.0, preferably to pH > 6.5. Particularly if non-neutralised cocoa is used, the pH of the food composition may be reduced to pH < 6.0. Consequently, the firmness may be reduced. In order to maintain the desired firmness of the food composition, the pH of the food composition preferably ranges between 6.0 and 9.0, more preferably between 6.5 and 7.5. Thus, in an embodiment, the food composition has a pH ranging between 6.0 and 9.0.

In an embodiment, the food composition does not show up as Maltese crosses when viewed under polarised light using a light microscope at a magnification of 200 x. If Maltese crosses do show up at this magnification, the food composition may have a sandy mouthfeel. This is a less preferred organoleptic property.

In an embodiment, the food composition has a filling viscosity of between 5 and 100 Pa.s, especially between 10 and 50 Pa.s. This is particularly advantageous if the food composition is (or is comprised by) the first dessert product which is filled together with a second dessert product having a filling viscosity > 30 mPa.s or having a filling viscosity > 1 Pa.s; *supra*.

(Further) preferred food compositions; additives.

In an embodiment, the food composition further comprises one or more additives selected from the group consisting of

    a. a sugar, preferably a monosaccharide and/or a disaccharide;
    b. an artificial sweetener, preferably an intense sweetener;
    c. an auxiliary sweetener, preferably a maltodextrin and/or a glucose syrup;
    d. a flavouring agent;
    e. a pH regulator selected from the group consisting of a base, an acid, and a buffer salt, wherein the buffer salt is preferably a carbonate and/or a phosphate;
    f. a colorant, and
    g. a structuring agent, wherein the structuring agent is preferably a hydrocolloid.

Herein, the sugar is preferably selected from the group consisting of saccharose, glucose, and fructose; the artifical sweetener is preferably selected from the group consisting of cyclamate, saccharine, sucraclose, aspartame, sweeteners derived from Stevia, and acesulfame-K; the flavouring agent may be any natural or artificial flavouring agent, preferably a food-grade flavouring agent, for example a flavouring agent selected from the group consisting of vanilla flavour, banana flavour, strawberry flavour, almond flavour, and hazelnut flavour; and the colorant may be any natural or artificial colorant, even more preferably a food-grade colorant, for example a colorant selected from the group consisting of beetroot, beta-carotene, cochenille red, caramel, and annatto. The presence of a pH regulator is particularly preferred if the pH of the food composition would drop below 6.5 or increase beyond 7.5, preferably beyond 8.0. In an embodiment, a pH regulator is used if the food composition comprises cocoa powder, particularly if the food composition comprises a non-alkalised cocoa powder. In an embodiment, the concentration of the structuring agent preferably does not exceed 0.5% or more preferably 1% by weight with respect to the total weight of the composition, in order not to negatively influence the mouthfeel of the composition, especially its melting behaviour. Most preferably, the hydrocolloid is a non-starch hydrocolloid. Preferably, the hydrocolloid is a pectin, a galactomannan or a carrageenan.

In an embodiment, the food composition comprises added starch or added modified starch in an amount of less than 1%, preferably less than 0.5% by weight with respect to the total weight of the composition. In a further preferred embodiment, the food composition is free of added starch or added modified starch. Added (modified) starch may negatively influence the mouthfeel of the composition, especially its melting behaviour. In an embodiment, the total amount of added starch, added modified starch and a structuring agent does not exceed 0.5%, more preferably 1% by weight with respect to the total weight of the composition.

In an embodiment, the food composition is free of an added sugar and/or an added polyol. This embodiment advantageously provides for a food composition which is suitably consumed as part of a weight management plan.

In an embodiment, the food composition has a total solid matter content of 15.5-70% (w/w). In an embodiment, the food composition has a total non-fat solid matter content of 5.5-55% (w/w), especially of 10-30% (w/w).

In a preferred embodiment, the food composition comprises: a) milk fat: 15-25% (w/w), b) non-globular milk protein: 1-2.8% (w/w), c) lactose: 0,5-5% (w/w), d) an added sugar: 0-13% (w/w), e) inulin: 8-12 % (w/w), f) cocoa powder: 3-8% (w/w), g) an intense sweetener: 0-0.5% (w/w), and h) a flavouring agent: 0-0.5% (w/w); wherein the weight ratio of fat : non-globular protein ranges between 11:1- 20:1, and wherein at least part of the inulin is undissolved. In yet a further preferred embodiment, the food composition comprises: a) milk fat: 18-23% (w/w), b) non-globular milk protein: 1.2-2.3% (w/w), c) lactose: 1-5% (w/w), d) an added sugar: 0-10% (w/w), e) inulin: 8-12 % (w/w), f) cocoa powder particles: 3-8% (w/w), g) an intense sweetener: 0.01-0.2% (w/w), and h) a flavouring agent: 0.01-0.2% (w/w); wherein the weight ratio of fat : non-globular protein ranges between 11:1- 20:1, and wherein at least part of the inulin is undissolved. In yet another preferred embodiment, the food composition consists of a) milk fat: 18-23% (w/w), b) non-globular milk protein: 1.5-2.3% (w/w), c) lactose: 1-5% (w/w), d) an added sugar in 0-10% (w/w), e) inulin: 8-12 % (w/w), f) cocoa powder particles: 3-8% (w/w), g) an intense sweetener: 0.01-0.2% (w/w), h) a flavouring agent: 0.01-0.2% (w/w), and i) a non-starch hydrocolloid: 0.05-1% (w/w); wherein the weight ratio of fat : non-globular protein ranges between 11:1-20:1, and wherein at least part of the inulin is undissolved.

Method for preparing a dessert product or food composition

In an embodiment, the present invention provides for a method for preparing a dessert product, the method comprising:

a. Mixing ingredients to obtain the food composition according to the present invention, including all of its embodiments described herein;
b. Heating the composition thus obtained to a temperature between 70 and 150 °C;
c. Cooling the liquid thus obtained to 0-35 °C;
d. Filling the dessert product thus obtained together with a second dessert product into a container.

In an embodiment, the method comprises homogenising the composition obtained under (a.) and/or the product obtained under (b.), wherein homogenising is performed at a temperature of 30-80 °C and a pressure of at least 40 bar and preferably takes place in one pass. Homogenising further contributes to the filling viscosity and the firmness of the dessert product. The maximum homogenising pressure is preferably and practically limited to about 1000 bar, more preferably to about 500 or 300 bar.

The mouthfeel of the dessert product may become more pleasant (i. e. less sandy) as the hot composition obtained under (b.) is cooled down more slowly under (c.). In a preferred embodiment, the liquid under (c.) is cooled in a first stage to a temperature of between about 15-35 °C and held at this temperature for about 1-48 hours, before it is further cooled, preferably to between 5 and 15 °C. According to this embodiment, the formation of large inulin particles - especially inulin crystals - and/or of large aggregates thereof is reduced or prohibited, as evidenced by the fact that a correspondingly prepared food composition does not show up as Maltese crosses when viewed under polarised light using a light microscope at a magnification of 200x.

In an embodiment, under (c.) the liquid is cooled with stirring and/or with shear. The mouthfeel of the first dessert product may become more pleasant (i.e. less sandy) if shear and/or stirring is applied under (c.). It is believed that shear forces applied to the liquid under (c.) (further) reduce the size of the inulin particles which start to develop in cooling process (c.). According to this embodiment, preferably the liquid is cooled under (c.) directly to a temperature of preferably 5-25 °C, more preferably to a temperature of 10-20 °C.

In a further preferred embodiment, the liquid under (c.) is cooled in a first stage to a temperature of between 21-29 °C and held at this temperature for 1-48 h, more preferably for 1-24 hours, before it is further cooled, preferably to between 5 and 15 °C. According to this embodiment, the formation of large inulin particles - especially crystals - and/or of large aggregates thereof is prevented.

In an embodiment, the liquid is cooled under (c.) before filling under (d.) until having a filling viscosity of between 5 and 100, especially between 10 and 50 Pa.s. If desired, the filling viscosity can be adjusted using a structuring agent, preferably a hydrocolloid, most preferably a carrageenan. As mentioned above, preferably, starch and/or modified starch is not added or only up to 1% (w/w), more preferably up to 0.5% (w/w). The total concentration of the added structuring agent is preferably lower than 1% (w/w), more preferably lower than 0.5% (w/w).

In an embodiment, the dessert product obtained at (d.) is further stored with cooling between 0 and 35 °C, preferably between 4 and 25 °C, more preferably between 4 and 15 °C, more preferably between 4 and 10 °C, most preferably at 7 °C. The temperature at which the product is stored is also indicated as storage temperature. Herein, preferably, the dessert product obtained at (d.) is stored for at least 4 hours, and/or until it has obtained a viscosity of 50-10000 Pa.s, more preferably of 150 to 5000 Pa.s, wherein the viscosity is a steady-shear viscosity as determined by rotational rheometry, preferably using a plate-plate geometry according to DIN 53018-1, under the following conditions:

- a gap width of 2 mm at 25 mm plate diameter,
- a shear rate of 1 $s^{-1}$, and
- a temperature of 10 °C; and

wherein during 10 s before determining the viscosity a pre-shear is applied at a shear rate of 1 $s^{-1}$ and at a temperature of 10 °C. Advantageously, the organoleptic properties of the dessert product thus obtained (also indicated as "final dessert product") may be most favourable. In particular, the dessert product is allowed to develop a paste-like structure having a high viscosity, which is sensorially perceived as a high firmness, or as a high mouthfeel thickness.

In an embodiment, after the dessert product obtained at (d.) is stored for at least 4 hours, and/or until the first dessert product has obtained a viscosity of 50-10000 Pa.s, more preferably of 150 to 5000 Pa.s, the dessert product is distributed to retailers, sold and/or consumed, preferably at a temperature of between 0 and 35 °C, preferably between 4 and 25 °C, more preferably between 4 and 15 °C, more preferably between 4 and 10 °C.

Advantageously, until the dessert product is consumed, its temperature remains reduced in order to reduce and/or prevent microbial growth. However, the temperature of the dessert product preferably remains above -2 °C, more preferably above 0 °C, more preferably above 4 °C and preferably at or below 10 °C.

In an embodiment, the ingredients comprise one or more fat sources selected from the group consisting of milk fat, anhydrous milk fat, milk, milk powder, whole milk, whole milk powder, condensed milk, butter, butter fat, butter powder and cream. Preferably, the fat which is contained by the dessert product comprises or consists of milk fat.

In an embodiment, the ingredients comprise one or more non-globular protein sources selected from the group consisting of a casein, a caseinate, fat globule membrane protein, milk, milk powder, skim milk, skimmed milk powder, and cream. Preferably, the non-globular protein which is contained by the dessert product comprises or consists of non-globular milk protein.

Multi-component dessert product.

The present invention provides a container containing a multi-component dessert product obtainable by adding a first and a second dessert product into a container, wherein the first dessert product comprises, or preferably consists of, the food composition according to the present invention. In other words, the first dessert product comprises or preferably consists of the food composition or dessert product described above. Hence, the present invention provides a container containing a multi-component dessert product comprising a first and a second dessert product, wherein the first dessert product comprises, or preferably consists of, the food composition according to the present invention. Herein, the term "second dessert product" refers to one or more dessert products which are not equal to the first dessert product and comprises one on more dessert products selected from the group consisting of a yoghurt, a quark, a pudding, a custard, a mousse, a bavaroise, a fruit composition, a whipped cream and a crème fraiche. The term "container" refers to any suitable holding case for a dessert product, preferably for a multi-component dessert product. Such a holding case is for example a beaker or a cup. The container is preferably made of a food grade plastic material. In an embodiment, the container is further made of an opaque or transparent material. Preferably, the container is closable, preferably using a lid or a cap.

In a further preferred embodiment, the first dessert product is present in one or more domains having a volume of at least 5 $mm^3$, in which domains the first dessert product is present as a separate phase. In an even further preferred embodiment, the one or more domains are one or more strands. Herein, a domain is a volume occupied by the first dessert product within the multi-component dessert product, in which volume the first dessert product is present as a separate phase. In other words, a domain is a volume in which the first dessert product can be identified as being essentially unmixed with any other components or dessert products which may be contained by the multi-component dessert product. In a preferred embodiment, the domain is (present in the shape of) a strand, a layer a pillar, a spot or a swirl.

In an embodiment, the first and the second dessert products have a non-fat solid matter content, expressed as a weight percentage based on the total weight of the first and the second dessert products, respectively, wherein the non-fat solid matter content of the first dessert product differs from the non-fat solid matter content of the second dessert product by not more than 5 percent points, especially by not more than 2 percent points. Thus for example, if the first dessert product has a non-fat solid matter content of 13% (w/w), then the non-fat solid matter content of the second dessert product preferably ranges between 8 and 18% (w/w); more preferably, the non-fat solid matter content of the second dessert product is also about 13% (w/w). Accordingly, migration of one or more components from the first to the second dessert product, or vice versa, may advantageously be inhibited or retarded.

In a preferred embodiment, the first dessert product differs in at least one textural property from a second dessert product. Advantageously, a multi-component dessert product according to this embodiment is particularly liked by consumers for the corresponding textural contrast which is perceived between the first dessert product and a second dessert product. In an embodiment, the at least one textural property is assessed using sensory evaluation, and the at least one textural property is selected from the group consisting of mouthfeel creaminess, melting behaviour, mouthfeel thickness, afterfeel thickness, and afterfeeling fatty. In an embodiment, the first dessert product has a higher mouthfeel creaminess, melting behaviour, mouthfeel thickness and/or afterfeel thickness as compared with a second dessert product, and preferably as determined by a trained sensory panel, preferably via a sensory profiling test and subsequent statistical analyses. Preferably, the first dessert product, or the food composition for a dessert product, does not comprise a fruit preparation. The addition of a fruit preparation to the first food component, or to the food composition for a dessert product, reduces the mouthfeel creaminess, melting behaviour, mouthfeel thickness and/or afterfeel thickness thereof. In a specific embodiment, the difference between the first and the second dessert product for at least one of the textural properties, especially selected from the group consisting of mouthfeel creaminess, melting behaviour, mouthfeel thickness, afterfeel thickness, and afterfeeling fatty, is on a scale of 0-10 at least 1, as determined by a trained sensory panel. For instance, the mouthfeel thickness of the first product may be about 6.5, whereas the mouthfeel thickness of the second dessert product may be about 4.5.

In an embodiment, the at least one textural property is measurable using laboratory apparatus, and the at least one textural property is selected from the group consisting of firmness and viscosity.

In an embodiment, the first dessert product has an enhanced firmness or viscosity as compared with the second dessert product. In a preferred embodiment, the firmness (as defined above) of the first dessert product ranges between 300 and 10000 or 30000 g, more preferably 500 and 5000 g and the firmness of the second dessert product ranges between 1 and 300 g, more preferably between 10 and 200 g. In an embodiment, the viscosity of the first dessert product ranges between 50 and 10000, more preferably between 150 and 5000 Pa.s, and the viscosity of the second dessert product ranges between ranges between 1 and 150 Pa.s, more preferably between 5 and 100 Pa.s (steady shear viscosities, as defined above). The organoleptic properties of the multi-component dessert product may be most favourable if the firmness and/or viscosity of the first dessert product, and preferably also for the second dessert product, are within the preferred indicated ranges. The textural contrast between the first dessert product and the second dessert product may be well perceived and most appreciated by a consumer if the firmness and/or viscosity of both the first and the second dessert product are within the indicated preferred ranges.

In an embodiment, the firmness or viscosity of the first dessert product are preferably obtained by sampling a suitable amount of the first dessert product from one or more domains in which it is present as a separate phase. This amount of the first dessert product is then preferably equilibrated for 24 h, preferably at a temperature of 7 °C for measuring the firmness or at a temperature of 10 °C for measuring the viscosity, and then measured. In another embodiment, the firmness or viscosity of the second dessert product are obtained in the same way. As will be clear to the person skilled in the art, likewise, i.e. equilibration for 24 h at the respective temperatures before measuring the firmness or viscosity also applies for measuring the food composition or dessert product.

The second dessert product comprises one or more dessert products selected from the group consisting of a yoghurt, a quark, a pudding, a custard, a mousse, a bavaroise, a fruit composition, a whipped cream and a crème fraiche. In an embodiment, the container containing a multi-component dessert product further comprises a topping and/or a base layer, the topping and/or base layer comprising or consisting of a fruit preparation, a whipped cream and/or a crème fraiche. Herein, a base layer is the layer which lies on the bottom of the container. Preferably, the topping and/or the base layer are filled into the container using a nozzle which is different from the nozzle employed for filling of the container with the first dessert product. Preferably, the topping comprises or consists of a whipped cream or of a crème fraiche. Preferably, the base layer comprises or consists of a fruit preparation.

In an embodiment, the container containing a multi-component dessert product, after filling, is stored, and preferably the multi-component dessert product is consumed, at a temperature of between 0-35 °C, more preferably between 4-25 °C, more preferably between 4-15 °C, most preferably between 4-10 °C. The multi-component dessert product has the most favourable organoleptic properties within the indicated preferred temperature ranges.

Method for preparing a multi-component dessert product.

All embodiments herein disclosed for the food composition, for the dessert product, for the multi-component dessert product and for the method for producing a dessert product, and for the multi-component dessert product also apply to the method for preparing a multi-component dessert product according to the present invention.

As mentioned above, the invention provides a method for preparing a multi-component dessert product, the multi-component dessert product comprising a first and a second dessert product, the method comprising:

a. mixing ingredients to obtain a food composition comprising:

i) 10-40% (w/w) of fat,
ii) 0.5-8% (w/w) of non-globular protein,
iii) 5-15% (w/w) of inulin, and
iv) 45-80% (w/w) of water,

wherein the weight ratio of fat : non-globular protein preferably ranges between 5:1 - 20:1;
b. heating the composition thus obtained to a temperature between 70 and 150 °C;
c. cooling the liquid thus obtained to 0-35 °C;
d. filling the first dessert product thus obtained at c) together with a second dessert product into a container, wherein second dessert product comprises one or more dessert products selected from the group consisting of a yoghurt, a quark, a pudding, a custard, a mousse, a bavaroise, a fruit composition, a whipped cream and a crème fraiche.

In an embodiment, the container containing the multi-component dessert product or the multi-component dessert product obtained at (d.) is further stored with cooling between 0 and 35 °C, preferably between 4 and 25 °C, more preferably between 4 and 15 °C, more preferably between 4 and 10 °C, most preferably at 7 °C. Herein, preferably, the multi-component dessert product obtained at (d.) is stored for at least 4 hours (storage time), and/or until the first dessert product has obtained a steady shear viscosity of 50-10000 Pa.s, more preferably of 150 to 5000 Pa.s, wherein the steady shear viscosity is determined by rotational rheometry using a plate-plate geometry according to DIN 53018-1 under the following conditions:

-   a gap width of 2 mm at 25 mm plate diameter,
-   a shear rate of 1 $s^{-1}$, and
-   a temperature which equals the storage temperature, however preferably at 10 °C;

wherein during 10 s before determining the viscosity a pre-shear is applied at a shear rate of 1 $s^{-1}$ at a temperature which equals the storage temperature, however preferably at 10 °C, and wherein during the determination of the steady shear viscosity, the sample contained by the plate-plate geometry is measured at the temperature which equals the storage temperature, preferably however at 10 °C. Hence, the product may be stored at 7 °C (a storage temperature), pre-sheared at 7 °C (temperature equal the storage temperature) and the viscosity measured at 7 °C (temperature equal the storage temperature). However, viscosity is especially measured at 10 °C, i.e. the product may be stored at 7 °C (a storage temperature), but pre-sheared at 10 °C and the viscosity and measured at 10 °C.

In an embodiment, the first dessert product obtained in process (d.) is sampled and stored at the storage temperature as described above, and the steady shear viscosity of the sampled first dessert product is preferably determined by transferring an appropriate amount of the sampled first dessert product obtained in process (d) into a plate-plate geometry, placing the sample thus obtained in a rotational rheometer and determining the steady shear viscosity of the sampled first dessert product as described above.

Advantageously, the organoleptic properties of the multi-component dessert product thus obtained are most favourable. In particular, the first dessert product is allowed to develop a paste-like structure having a high viscosity, which is sensorially perceived as a pleasantly thick, paste-like texture having a high firmness or high mouthfeel thickness.

In an embodiment, after the multi-component dessert product obtained at (d.) is stored for at least 4 hours, and/or until the first dessert product has obtained a viscosity of 50-10000 Pa.s, more preferably of 150 to 5000 Pa.s, the multi-component dessert product is distributed to retailers, sold and/or consumed, preferably at a temperature of between 0 and 35 °C, preferably between 4 and 25 °C, more preferably between 4 and 15 °C, more preferably between 4 and 10 °C.

Herein, the phrase "filling the first dessert product (thus obtained at c)) together with the second dessert product into a container refers to a filling of the container with the first and second dessert product at the same time, such that for instance a "vertical" multi-component dessert product may be obtained, but may also refer to a sequential filling of the container with the first and second dessert product, such that for instance a "horizontal" (i.e. layered) multi-component dessert product may be obtained.

Advantageously, until the multi-component dessert product is consumed, its temperature remains reduced in order to reduce and/or prevent microbial growth.

The invention is also directed a method for preparing a dessert product (or food composition).

EXAMPLES

1. First dessert product, base composition.

A multi-component dessert product was prepared using a first and a second dessert product. To this end, the first dessert product was first prepared. The composition of the first dessert product is provided in Table 1. The second dessert product was a pudding; the composition of the second dessert product is shown in Table 5 (*infra*).

The non-fat solid matter content of the first dessert product was matched to that of the second dessert product in order to prevent undesired migration of water between the two dessert products.

Given that the non-globular protein content of the skim milk was 2.8 % (w/w) and that the non-globular protein content of the cream was 1.6 % (w/w), it was calculated that the composition according to Table 1 contained (30*0.028 + 50*0.016) = 1.64 % (w/w). The fat content of the composition according to Table 1 was calculated as (50*0.4) = 20 %. Hence, the weight ratio of fat : non-globular protein was 12.2 : 1.

Table 1: Food composition of the first dessert product

| Amount (w/w) | Ingredient |
| --- | --- |
| 50 % | cream (40 % milk fat) |
| 30 % | skim milk |
| 10 % | long chain inulin (Frutafit Tex!) |
| 5 % | table sugar |
| 5 % | cocoa |
| 0.05 % | Acesulfame-K |

As to the manufacturing of the first dessert product, first, a premix was formed by dissolving all dry ingredients in the liquids (skim milk, cream, water). The premix was then heat treated to 90 °C for 10 mins. During this process, the inulin was dissolved (above around 70 °C). In addition, almost full denaturation of the whey proteins occurred.

After the heat treatment, the composition thus obtained was cooled down to 70 °C and homogenised downstream (at 200 bar, in a single stage). During homogenising, the size of the fat globules was reduced and (more) fat clusters were formed. These clusters are believed to be responsible for the pronounced filling viscosity increase which was observed due to the homogenising process.

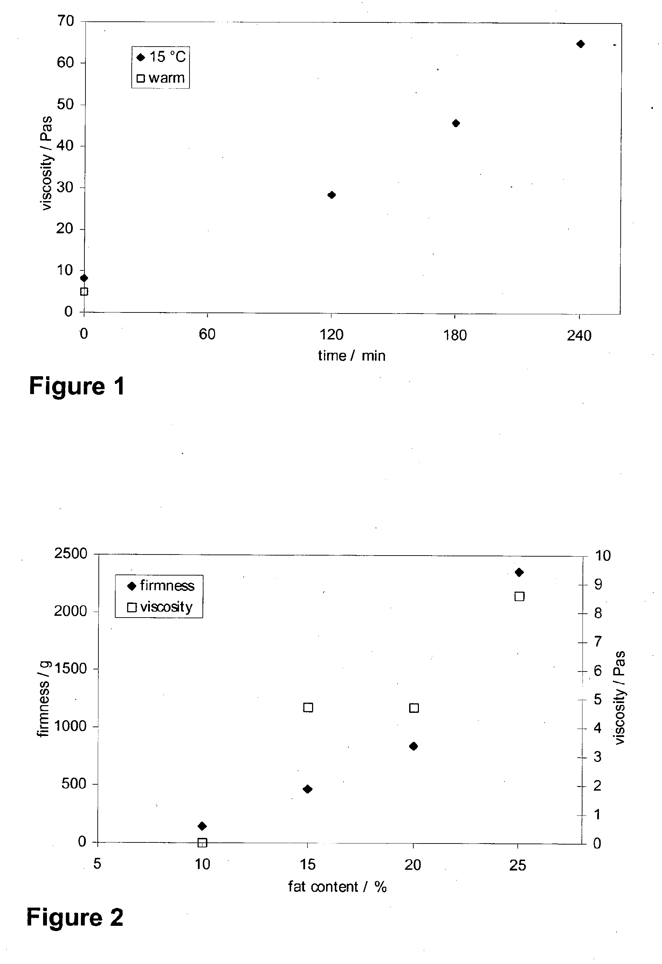

After homogenising, the liquid thus obtained was cooled to 15 °C, while gently stirring. When this temperature was reached the dessert product was filled into cups and stored at 7 °C. The viscosity of the paste-like first dessert product was found to increase along with time (storage time), which is attributed to inulin crystallisation (see Figure 1).

2. Effect of several parameters on textural properties of base composition of first dessert product.

2.1 Fat content

A higher fat content significantly increased the filling viscosity at filling and the firmness of the first dessert product after storage for 72 h at 7 °C (see Figure 2) and especially above 20 % this effect became quite strong. The samples were prepared as described in Example 1. The fat content was adjusted by the ratio of cream, skim milk and water in order to keep the fat : non globular protein ratio constant.

2.2 Fat : protein ratio

The fat : non-globular protein ratio has a significant influence on the filling viscosity, firmness and mouthfeel of the first dessert product. This ratio can be adjusted by e.g. varying the relative amounts of cream, skim milk and water in the recipe. Accordingly, several first dessert products were prepared with a fat content of 20 % and having non-globular protein contents of 1, 1.5, 2 and 2.5 % resulting in fat : non-globular protein ratios between 8 and 20. The properties of the resulting product are listed in Table 2. The sensory scores of melting behaviour and mouthfeel thickness were determined by a trained sensory panel consisting of 12 experts via a sensory profiling test on a scale from 0 to 10 (0 = absent; 10 = very pronounced).

Table 2. Dependency of the properties of the first dessert component on the fat : non-globular protein ratio (20 % (w/w) fat, 10 % (w/w) inulin).

| fat : non-globular protein ratio | filling viscosity, 7 °C Pa.s | Firmness, 7 °C g | Product viscosity, 10 °C Pa.s |
|---|---|---|---|
| 10:1 | 7.1 | 2200 | 1150 |
| 12.2:1 | 10.1 | 1400 | 300 |
| 16.7:1 | 12.1 | 1200 | 280 |
| 25:1 | 17.8 | 1100 | 270 |

| fat : non-globular protein ratio | Sensory rating: mouthfeel thickness | Sensory rating: melting behaviour |
|---|---|---|
| 10:1 | 8.5 | 1.2 |
| 12.2:1 | 6.6 | 3.9 |
| 16.7:1 | 6.3 | 4.9 |
| 25:1 | 5.2 | 5.4 |

At a fat :non-globular protein ratio of 10:1 a very firm paste was obtained, but its filling viscosity is close to the lower end of the preferred range. It also did not have the desired good melting behaviour found at the higher ratios. At a fat : non-globular protein ratio of 12.2:1 and 16.7:1, the best compromise of filling viscosity, firmness, mouthfeel thickness and melting behaviour was found. The sample at a fat : non-globular protein ratio of 25:1 scores low in mouthfeel thickness.

2.3 Inulin.

The presence of inulin appeared to be necessary for obtaining the desired organoleptic properties of the first dessert product, in particular its high firmness and its paste-like texture. This is possibly due to the formation of a particle gel of crystallised inulin. Electron cryo-microscopy has shown that such an inulin gel is composed of a three-dimensional network of insoluble inulin particles in water, the particle size of which being typically smaller than 1 micron in at least one dimension. These inulin particles may aggregate to form larger clusters having a diameter of 1 to 5 microns. Large amounts of water are immobilised in that network, as determined by NMR experiments, which assures the physical stability of the gel in function of time. The X-ray diffraction pattern confirms the crystalline nature of the gel particles, whereas the starting inulin powder is essentially amorphous.

This gel formation is quite slow (several hours, see Figure 1) and is also the main reason, why the first dessert product stayed quite liquid during heat treatment and filling, while it formed a paste-like composition having a high firmness and high viscosity after several hours of cooling.

Table 3. Dependency of firmness on the type of inulin (at 10 % (w/w) dosage, 20 % (w/w) fat, 12.2:1 fat : non-globular protein ratio).

| Inulin type | Average DP | Firmness, 7 °C / g |
|---|---|---|
| Raftiline HPX | > 23 | 1100 |
| Frutafit Tex! | > 23 | 1100 |
| Raftiline HP-Gel | > 23 | 1050 |
| Raftiline GR | ≥ 10 | 350 |

Table 3 demonstrates the firmness of the first dessert product as a function of the type of inulin, in particular its average degree of polymerisation (DP).

In another experiment, the amount of inulin was varied between 5, 10 and 15 % while keeping the total solid matter in the recipe constant. This was achieved by substituting table sugar with inulin (type: Frutafit Tex!) - or vice versa - in the recipe of Table 1. The dependency of firmness and filling viscosity on the amount of inulin is shown in Table 4.

Table 4. Dependency of firmness and filling viscosity on amount of inulin (20 % (w/w) fat, 12.2:1 fat : non-globular protein ratio).

| Inulin content (w/w) | filling viscosity, 7 °C Pa.s | Firmness, 7 °C g |
|---|---|---|
| 5 % | 8.9 | 400 |
| 10 % | 11.1 | 900 |
| 15 % | 13.7 | 1600 |

With a firmness of 400 g, the sample containing only 5 % inulin is relatively low. It was found that higher inulin contents suitably provided a strongly increased firmness, whilst modifying the filling viscosity to a lesser degree.

2.3 Non-inulin additive particles (example: cocoa powder)

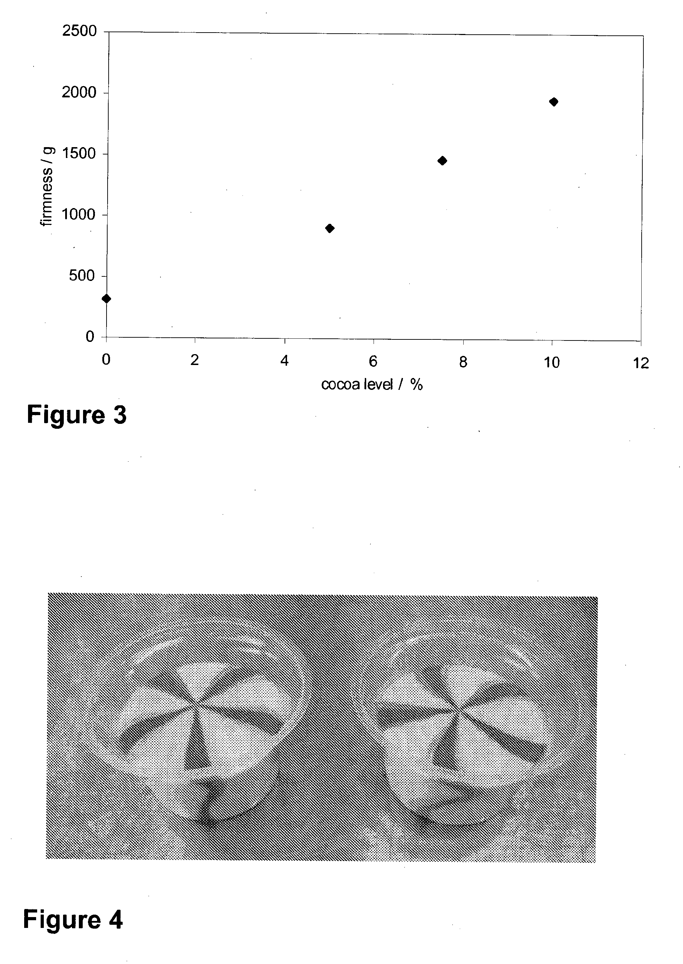

The influence of added cocoa powder, on the firmness of the first dessert product is illustrated in Figure 3. Clearly, the firmness increases with increasing content of cocoa powder. Cocoa powder could be replaced by e. g. vanilla bean powder in order to obtain a comparable effect on the firmness of the first dessert product.

3. Preparation of multi-component dessert product

A vessel was filled with the first dessert product having the base composition according to Table 1. After homogenising at 200 bar at 70 °C, the product thus obtained was cooled to 25 °C and kept at that temperature for 4 hours. Thereafter, the product thus obtained was further cooled to 15 °C. The second dessert product was a pudding having the composition as depicted in Table 5, and was prepared by dissolving all dry ingredients in the milk and cream, UHT treating this mixture and cooling to 10 °C. The first dessert product was then filled into a container together with the second dessert product. Filling of the container was accomplished using a Wagenrad nozzle (cf DE10346193). The properties of the first and of the second dessert product are depicted in Table 6. The sensory properties of the first and of the second dessert product were assessed by an expert panel of 12 persons using a sensory profiling test.

Table 5. Composition of the second dessert product contained by the multi-component dessert product according to the present example.

| Ingredient | content by weight |
|---|---|
| cream (40 % fat) | 13 % |
| skim milk | 68 % |
| sugar | 13 % |
| starch | 5% |
| emulsifier E472b | 0.02% |
| carrageenan | 0.015 % |

(continued)

| Ingredient | content by weight |
|---|---|
| flavour | 0.8% |
| colourant | 0.1 % |

Table 6. Properties of the first and the second dessert product contained by the multi-component dessert product according to the present example.

| Property | First dessert product | Second dessert product |
|---|---|---|
| non-fat solid matter | 24.3 % | 23.6 % |
| Filling viscosity, 7 °C / Pa.s | 12.1 | 18 |
| Firmness, 7 °C / g | 1200 | 100 |
| Viscosity, 10 °C / Pa.s | 290 | 37 |
| Sensory: mouthfeel creaminess | 5.2 | 2.1 |
| Sensory: melting behaviour | 4.9 | Not applicable |
| Sensory: mouthfeel thickness | 6.3 | 2.7 |
| Sensory: afterfeeling fatty | 4.7 | 1.4 |

The container was filled with 110 g of the second dessert product together with 15 g of the first dessert product. Figure 4 shows the container which was thus filled using the Wagenrad nozzle. The first dessert product was found to be present in domains having a volume of at least 5 mm$^3$, in which domains the first dessert product was present as a separate phase. Clearly, the one or more domains are present as one or more strands.

Due to the matching of the non-fat solid matter content of the first dessert product with that of the second dessert product no water migration between the two components could be observed over a shelf-life of 28 days.

## Claims

1. Container containing a multi-component dessert product comprising a first and a second dessert product, wherein the first dessert product comprises a food composition for a dessert product, the food composition comprising

   a. 10-40% (w/w) of fat,
   b. 0.5-8% (w/w) of non-globular protein,
   c. 5-15% (w/w) of inulin, and
   d. 45-80% (w/w) of water,

   wherein the weight ratio of fat : non-globular protein ranges between 5:1 - 20:1, and wherein at least part of the inulin is undissolved, wherein the second dessert product comprises one or more dessert products selected from the group consisting of a yoghurt, a quark, a pudding, a custard, a mousse, a bavaroise, a fruit composition, a whipped cream and a crème fraiche.

2. Container according to claim 1, wherein the weight ratio of fat : non-globular protein ranges of the first dessert product is between 12:1 - 20:1.

3. Container according to one of claims 1-2, wherein the first dessert product has a viscosity of 50-10000 Pa.s, wherein the viscosity is the steady shear viscosity of the first dessert product, the steady shear viscosity being determined by rotational rheometry using a plate-plate geometry according to DIN 53018-1 under the following conditions:

   - a gap width of 2 mm at 25 mm plate diameter,
   - a shear rate of 1 s$^{-1}$, and
   - a temperature of 10 °C; and

   wherein during 10 s before determining the viscosity a pre-shear is applied at a shear rate of 1 s$^{-1}$ and at a temperature of 10 °C.

4. Container containing according to one of the preceding claims, wherein the first dessert product has a firmness of 300-30000 g, wherein the firmness is the final value of the force required to penetrate the first dessert product to a depth of 18 mm at a speed of 2 mm.s$^{-1}$ with a cylindrical probe having a diameter of 25 mm, wherein the first dessert product is filled in a cylindrical cup with a diameter of 75 mm to a minimum filling height of 40 mm, and wherein the first dessert product has a temperature of 7 °C.

5. Container according to one of the preceding claims, wherein the inulin has an average degree of polymerisation ≥ 10, preferably > 23.

6. Container according to one of the preceding claims, the first dessert product further comprising non-inulin additive particles in an amount of 0.05-10% (w/w).

7. Container according to claim 6, wherein the non-inulin additive particles are selected from the group consisting of cocoa powder and vanilla bean powder.

8. Container according to one of the preceding claims, wherein the food composition further comprises one or more additives selected from the group consisting of

   a. a sugar, preferably a monosaccharide and/or a disaccharide;
   b. an artificial sweetener, preferably an intense sweetener;
   c. an auxiliary sweetener, preferably a maltodextrin and/or a glucose syrup;
   d. a flavouring agent;
   e. a pH regulator selected from the group consisting of a base, an acid, and a buffer salt, wherein the buffer salt is preferably a carbonate and/or a phosphate;
   f. a colorant, and
   g. a structuring agent, wherein the structuring agent is preferably a hydrocolloid.

9. Container according to one of the preceding claims, wherein the food composition comprises added starch or added modified starch in an amount of less than 0.5% by weight, or wherein the food composition is free of added starch or added modified starch.

10. Container according to one of the preceding claims, wherein the food composition comprises

   a. milk fat: 15-25% (w/w),
   b. non-globular milk protein: 1-2.8% (w/w),
   c. lactose: 0.5-5% (w/w),
   d. an added sugar: 0-13% (w/w),
   e. inulin: 8-12 % (w/w),
   f. cocoa powder: 3-8% (w/w),
   g. an intense sweetener: 0-0.5% (w/w), and
   h. a flavouring agent: 0-0.5% (w/w); wherein the weight ratio of fat : non-globular protein ranges between 11: 1- 20:1.

11. Container according to one of the preceding claims, wherein the food composition is present in one or more domains having a volume of at least 5 mm$^3$, in which domains the first dessert product is present as a separate phase.

12. Container according to one of the preceding claims, wherein the first and the second dessert products have a non-fat solid matter content, expressed as a weight percentage based on the total weight of the first and the second dessert products, respectively, wherein the non-fat solid matter content of the first dessert product differs from the non-fat solid matter content of the second dessert product by not more than 5 percent points.

13. Container according to one of the preceding claims, wherein the first dessert product differs in at least one textural property from the second dessert product, the at least one textural property is assessed using sensory evaluation, and wherein the at least one textural property is selected from the group consisting of mouthfeel creaminess, melting behaviour, mouthfeel fast away, mouthfeel sticky, mouthfeel thickness, afterfeel thickness, and afterfeeling fatty.

**14.** Container according to claim 1, comprising 7-15% (w/w) of inulin.

**15.** A method for preparing a multi-component dessert product, the multi-component dessert product comprising a first and a second dessert product, the method comprising:

a. mixing ingredients to obtain a food composition comprising:

i) 10-40% (w/w) of fat,
ii) 0.5-8% (w/w) of non-globular protein,
iii) 5-15% (w/w) of inulin, and
iv) 45-80% (w/w) of water,

wherein the weight ratio of fat : non-globular protein preferably ranges between 5:1 - 20:1;
b. heating the composition thus obtained to a temperature between 70 and 150 °C;
c. cooling the liquid thus obtained to 0-35 °C;
d. filling the first dessert product thus obtained at c) together with a second dessert product into a container, wherein second dessert product comprises one or more dessert products selected from the group consisting of a yoghurt, a quark, a pudding, a custard, a mousse, a bavaroise, a fruit composition, a whipped cream and a crème fraiche.

**16.** Method according to claim 15, wherein the method further comprises homogenising the composition obtained under (a.) and/or the liquid obtained under (b.), wherein homogenising is performed at a temperature of 30-80 °C and a pressure of at least 40 bar and preferably takes place in one pass.

**17.** Method according to one of claims 15-16, wherein the liquid is cooled to 0-35 °C until having a filling viscosity of between 5 and 100, wherein the filling viscosity is defined as the viscosity of the dessert product directly after its preparation, and wherein the filling viscosity is determined at a shear rate of 13.9 $s^{-1}$ after applying a steady pre-shear for 30 s at a shear rate of 13.9 $s^{-1}$ and at a temperature of 7 °C.

**18.** Method according to one of claims claim 15-17, the method further comprising storing the container at a storage temperature of between 0-35 °C, until the dessert product has a viscosity of between 50 to 10000 Pa.s, wherein the viscosity is a steady shear viscosity as determined by rotational rheometry using a plate-plate geometry according to DIN 53018-1 under the following conditions:

- a gap width of 2 mm at 25 mm plate diameter, and
- a shear rate of 1 $s^{-1}$, and
- a temperature which equals the storage temperature;

wherein during 10 s before determining the viscosity a pre-shear is applied at a shear rate of 1 $s^{-1}$ and at a temperature which equals the storage temperature.

**Patentansprüche**

**1.** Behälter, enthaltend ein Mehrkomponenten-Dessertprodukt, das ein erstes und ein zweites Dessertprodukt umfasst, wobei das erste Dessertprodukt eine Nahrungsmittelzusammensetzung für ein Dessertprodukt umfasst, und wobei die Nahrungsmittelzusammensetzung umfasst:

a. 10-40% (Gew./Gew.) Fett,
b. 0.5-8% (Gew./Gew.) nicht-globuläres Protein,
c. 5-15% (Gew./Gew.) Inulin, und
d. 45-80% (Gew./Gew.) Wasser,

wobei das Gewichtsverhältnis Fett : nicht-globuläres Protein im Bereich von 5 : 1 - 20 : 1 liegt, und wobei mindestens ein Teil des Inulins ungelöst ist, wobei das zweite Dessertprodukt ein oder mehrere Dessertprodukte umfasst ausgewählt aus der Gruppe bestehend aus einem Joghurt, einem Quark, einem Pudding, einem Vanillekrem, einer Mousse, einer Bayerischen Creme, einer Fruchtzusammensetzung, Schlagsahne und Creme fraiche.

**2.** Behälter nach Anspruch 1, wobei das Gewichtsverhältnis Fett: nicht-globuläres Protein des ersten Dessertprodukts im Bereich zwischen 12 : 1 - 20 : 1 liegt.

**3.** Behälter nach einem der Ansprüche 1 bis 2, wobei das erste Dessertprodukt eine Viskosität von 50-10000 Pa·s aufweist, wobei die Viskosität die stationäre Scherviskosität des ersten Dessertproduktes ist, wobei die stationäre Scherviskosität mittels Rotationsrheometrie unter Verwendung einer Platte-Platte-Geometrie gemäß DIN 53018-1 unter den folgenden Bedingungen bestimmt wird:

- Messspalt 2 mm bei einem Plattendurchmesser von 25 mm,
- Schergeschwindigkeit 1 s$^{-1}$; und
- Temperatur 10°C; und

wobei vor der Bestimmung der Viskosität für 10 s ein Vorscheren mit einer Schergeschwindigkeit von 1 s$^{-1}$ und einer Temperatur von 10°C angewendet wird.

**4.** Behälter nach einem der vorangehenden Ansprüche, wobei das erste Dessertprodukt eine Festigkeit von 300-30000 g aufweist, wobei die Festigkeit der Endwert der Kraft ist, die erforderlich ist, um das erste Dessertprodukt bei einer Drehzahl von 2 mm.s$^{-1}$ bis zu einer Tiefe von 18 mm mit einer zylindrischen Sonde, die einen Durchmesser von 25 mm hat, zu durchdringen, wobei das erste Dessertprodukt in einen zylindrischen Becher mit einem Durchmesser von 75 mm bis zu einer Mindestfüllhöhe von 40 mm gefüllt wird, und wobei das erste Dessertprodukt eine Temperatur von 7°C hat.

**5.** Behälter nach einem der vorangehenden Ansprüche, wobei das Inulin einen durchschnittlichen Polymerisationsgrad von ≥ 10, bevorzugt von > 23 hat.

**6.** Behälter nach einem der vorangehenden Ansprüche, wobei das erste Dessertprodukt des Weiteren Nicht-Inulin-Additivpartikel in einer Menge von 0.05-10% (Gew./Gew.) umfasst.

**7.** Behälter nach Anspruch 6, wobei die Nicht-Inulin-Additivpartikel ausgewählt sind aus der Gruppe bestehend aus Kakaopulver und Vanilleschotenpulver.

**8.** Behälter nach einem der vorangehenden Ansprüche, wobei die Nahrungsmittelzusammensetzung des Weiteren ein oder mehrere Additiv(e) umfasst, die ausgewählt sind aus der Gruppe bestehend aus

a. einem Zucker, bevorzugt einem Monosaccharid und/oder einem Disaccharid;
b. einem künstlichen Süßstoff, bevorzugt einem intensiven Süßstoff;
c. einem Hilfssüßstoff, bevorzugt einem Maltodextrin und/oder einem Glucosesirup;
d. einem Aromastoff;
e. einem pH-Wert-Regulator ausgewählt aus der Gruppe bestehend aus einer Base, einer Säure und einem Puffersalz, wobei das Puffersalz bevorzugt ein Carbonat und/oder ein Phosphat ist;
f. einem Farbstoff; und
g. einem Strukturmittel, wobei das Strukturmittel bevorzugt ein Hydrokolloid ist.

**9.** Behälter nach einem der vorangehenden Ansprüche, wobei die Nahrungsmittelzusammensetzung hinzugefügte Stärke oder hinzugefügte modifizierte Stärke in einer Menge von weniger als 0,5 Gew.-% umfasst, oder wobei die Nahrungsmittelzusammensetzung frei von hinzugefügter Stärke oder hinzugefügter modifizierter Stärke ist.

**10.** Behälter nach einem der vorangehenden Ansprüche, wobei die Nahrungsmittelzusammensetzung umfasst:

a. Milchfett: 15-25% (Gew./Gew.),
b. nicht-globuläres Milchprotein: 1-2,8% (Gew./Gew.),
c. Lactose: 0,5-5% (Gew./Gew.),
d. einen hinzugefügten Zucker: 0-13% (Gew./Gew.),
e. Inulin: 8-12% (Gew./Gew.),
f. Kakaopulver: 3-8% (Gew./Gew.),
g. einen intensiven Süßstoff: 0-0,5% (Gew./Gew.),
h. einen Aromastoff: 0-0,5% (Gew./Gew.); wobei das Gewichtsverhältnis Fett: nicht-globuläres Protein im Bereich von 11 : 1 - 20 : 1 liegt.

**11.** Behälter nach einem der vorangehenden Ansprüche, wobei die Nahrungsmittelzusammensetzung in einem oder mehreren Bereichen vorliegt, die ein Volumen von mindestens 5 mm$^3$ haben, in denen das erste Dessertprodukt als eine separate Phase vorliegt.

**12.** Behälter nach einem der vorangehenden Ansprüche, wobei das erste und das zweite Dessertprodukt einen Gehalt an fettfreier Trockenmasse haben, der als Gewichtsprozent bezogen auf das Gesamtgewicht des ersten bzw. des zweiten Dessertprodukts ausgedrückt ist, wobei der Gehalt an fettfreier Trockenmasse des ersten Dessertprodukts vom Gehalt an fettfreier Trockenmasse des zweiten Dessertprodukts um nicht mehr als 5 Prozentpunkte abweicht.

**13.** Behälter nach einem der vorangehenden Ansprüche, wobei sich das erste Dessertprodukt in mindestens einer Textureigenschaft von dem zweiten Dessertprodukt unterscheidet, wobei die mindestens eine Textureigenschaft mittels sensorischer Beurteilung bestimmt wird, und wobei die mindestens eine Textureigenschaft ausgewählt ist aus der Gruppe bestehend aus cremigem Mundgefühl, Schmelzverhalten, kein anhaltendes Mundgefühl, Mundgefühl der Klebrigkeit, Mundgefühl der Dicke, Nachgefühl der Dicke, fettiges Nachgefühl.

**14.** Behälter nach Anspruch 1, umfassend 7-15% (Gew./Gew.) Inulin.

**15.** Verfahren zur Herstellung eines Mehrfachkomponenten-Dessertprodukts, wobei das Mehrfachkomponenten-Dessertprodukt ein erstes Dessertprodukt und ein zweites Dessertprodukt umfasst, wobei das Verfahren umfasst:

    a. Mischen der Bestandteile, um eine Nahrungsmittelzusammensetzung zu erhalten, die umfasst:

        i) 10-40% (Gew./Gew.) Fett
        ii) 0,5-8% (Gew./Gew.) nicht-globuläres Protein,
        iii) 5-15% (Gew./Gew.) Inulin, und
        iv) 45-80% (Gew./Gew.) Wasser,

    wobei das Gewichtsverhältnis Fett : nicht-globuläres Protein bevorzugt im Bereich von 5 : 1 - 20 : 1 liegt;
    b. Erhitzen der so erhaltenen Zusammensetzung auf eine Temperatur zwischen 70 und 150°C;
    c. Kühlen der so erhaltenen Flüssigkeit auf 0-35°C;
    d. Abfüllen des so in Schritt c) erhaltenen ersten Dessertprodukts zusammen mit einem zweiten Dessertprodukt in einen Behälter, wobei das zweite Dessertprodukt ein oder mehrere Dessertprodukte umfasst, die ausgewählt sind aus der Gruppe bestehend aus einem Joghurt, einem Quark, einem Pudding, einem Vanillekrem, einer Mousse, einer Bayerischen Creme, einer Fruchtzusammensetzung, Schlagsahne und Creme fraiche.

**16.** Verfahren nach Anspruch 15, wobei das Verfahren des Weiteren das Homogenisieren der in Schritt (a.) erhaltenen Zusammensetzung und/oder der in Schritt (b.) erhaltenen Flüssigkeit umfasst, wobei das Homogenisieren bei einer Temperatur von 30-80°C und einem Druck von mindestens 40 bar durchgeführt wird und bevorzugt in einem Durchgang erfolgt.

**17.** Verfahren nach einem der Ansprüche 15-16, wobei die Flüssigkeit auf 0-35°C gekühlt wird, bis sie eine Abfüllviskosität zwischen 5 und 100 hat, wobei die Abfüllviskosität als die Viskosität definiert ist, die das Dessertprodukt unmittelbar nach seiner Herstellung aufweist, und wobei die Abfüllviskosität mit einer Schergeschwindigkeit von 13,9 s$^{-1}$ nach Anwendung eines stationären Vorscherens für 30 s mit einer Schergeschwindigkeit von 13,9 s$^{-1}$ und bei einer Temperatur von 7°C bestimmt wird.

**18.** Verfahren nach einem der Ansprüche 15-17, wobei das Verfahren des Weiteren das Lagern des Behälters bei einer Lagertemperatur zwischen 0-35°C umfasst, bis das Dessertprodukt eine Viskosität zwischen 50 bis 10000 Pa.s aufweist, wobei die Viskosität die stationäre Scherviskosität ist, wie mittels Rotationsrheometrie unter Verwendung einer Platte-Platte-Geometrie gemäß DIN 53018-1 unter den folgenden Bedingungen bestimmt:

    - Messspalt 2 mm bei einem Plattendurchmesser von 25 mm, und
    - eine Schergeschwindigkeit 1 s$^{-1}$; und
    - eine Temperatur, die der Lagertemperatur entspricht; und

wobei vor der Bestimmung der Viskosität für 10 s ein Vorscheren mit einer Schergeschwindigkeit von 1 s$^{-1}$ und bei einer Temperatur, die der Lagertemperatur entspricht, angewendet wird.

**Revendications**

1. Récipient contenant un produit de dessert multi-composant comprenant un premier et un deuxième produit de dessert, le premier produit de dessert comprenant une composition alimentaire pour un produit de dessert, la composition alimentaire comprenant

   a. 10 à 40 % (p/p) de matière grasse,
   b. 0,5 à 8 % (p/p) de protéine non globulaire,
   c. 5 à 15 % (p/p) d'inuline, et
   d. 45 à 80 % (p/p) d'eau,

   le rapport en poids de matière grasse à la protéine non globulaire étant entre 5:1 et 20:1, et dans lequel au moins une partie de l'inuline est non dissoute, le deuxième produit de dessert comprenant un ou plusieurs produits de dessert choisis dans le groupe constitué d'un yaourt, un quark, un pudding, une crème, une mousse, une crème bavaroise, une composition à base de fruits, une crème fouettée et une crème fraîche.

2. Récipient selon la revendication 1, dans lequel le rapport en poids de la matière grasse : protéine non globulaire du premier produit de dessert se situe entre 12:1 à 20:1.

3. Récipient selon l'une des revendications 1 à 2, dans lequel le premier produit de dessert a une viscosité de 50 à 10000 Pa.s, la viscosité étant la viscosité au cisaillement stable du premier produit de dessert, la viscosité au cisaillement stable étant déterminée par rhéométrie rotationnelle en utilisant une géométrie plan-plan selon la norme DIN 53018-1 dans les conditions suivantes :

   - une largeur de gap de 2 mm à un diamètre de plaque de 25 mm,
   - un taux de cisaillement de 1 s$^{-1}$ et
   - une température de 10° C ; et

   dans lequel pendant 10 s avant de déterminer la viscosité, un pré-cisaillement est appliqué à un taux de cisaillement de 1 s$^{-1}$ et à une température de 10° C.

4. Récipient selon l'une des revendications précédentes, dans lequel le premier produit de dessert a une fermeté de 300 à 30000 g, la fermeté étant la valeur finale de la force requise pour pénétrer dans le premier produit de dessert à une profondeur de 18 mm à une vitesse de 2 mm.s$^{-1}$ avec une sonde cylindrique ayant un diamètre de 25 mm, le premier produit de dessert étant conditionné dans une coupe cylindrique présentant un diamètre de 75 mm à une hauteur de remplissage minimale de 40 mm, et le premier produit de dessert ayant une température de 7° C.

5. Récipient selon l'une des revendications précédentes, dans lequel l'inuline a un degré moyen de polymérisation $\geq$ 10, de préférence, > 23.

6. Récipient selon l'une des revendications précédentes, le premier produit de dessert comprenant en outre des particules additives non inuline en une quantité de 0,05 à 10 % (p/p).

7. Récipient selon la revendication 6, dans lequel les particules additives non inuline sont choisies dans le groupe comprenant la poudre de cacao et la poudre de gousse de vanille.

8. Récipient selon l'une des revendications précédentes, dans lequel la composition alimentaire comprend en outre un ou plusieurs additifs choisis dans le groupe comprenant

   a. un sucre, de préférence, un monosaccharide et/ou un disaccharide ;
   b. un édulcorant artificiel, de préférence, un édulcorant intense ;
   c. un édulcorant auxiliaire, de préférence, une maltodextrine et/ou un sirop de glucose ;
   d. un agent aromatisant ;
   e. un régulateur du pH choisi dans le groupe comprenant une base, un acide et un sel tampon, le sel tampon étant de préférence un carbonate et/ou un phosphate ;
   f. un colorant, et
   g. un agent structurant, l'agent structurant étant de préférence un hydrocolloïde.

**9.** Récipient selon l'une des revendications précédentes, dans lequel la composition alimentaire comprend un amidon ajouté ou un amidon modifié ajouté en une quantité de moins de 0,5 % en poids ou dans lequel la composition alimentaire est dépourvue d'amidon ajouté ou d'amidon modifié ajouté.

**10.** Récipient selon l'une des revendications précédentes, dans lequel la composition alimentaire comprend

 a. matière grasse du lait : 15 à 25 % (p/p)
 b. protéine du lait non globulaire : 1 à 2,8 % (p/p),
 c. lactose : 0,5 à 5 % (p/p),
 d. un sucre ajouté : 0 à 13 % (p/p),
 e. inuline : 8 à 12 % (p/p),
 f. poudre de cacao : 3 à 8 % (p/p),
 g. un édulcorant intense : 0 à 0,5 % (p/p), et
 h. un agent aromatisant : 0 à 0,5 % (p/p), le rapport en poids des matières grasses à la protéine non globulaire se situant entre 11:1 à 20:1.

**11.** Récipient selon l'une des revendications précédentes, dans lequel la composition alimentaire est présente dans un ou plusieurs domaines ayant un volume d'au moins 5 mm$^3$, le premier produit de dessert étant présent dans lesdits domaines en phase séparée.

**12.** Récipient selon l'une des revendications précédentes, dans lequel les premier et deuxième produits de dessert ont une teneur en matière solide non grasse, exprimée en pourcentage en poids sur la base du poids total des premier et deuxième produits de dessert, respectivement, la teneur en matière solide non grasse du premier produit de dessert différant de la teneur en matière solide non grasse du deuxième produit de dessert de pas plus de 5 %.

**13.** Récipient selon l'une des revendications précédentes, dans lequel le premier produit de dessert diffère dans au moins une propriété texturale du deuxième produit de dessert, au moins la propriété texturale étant évaluée en recourant à une évaluation sensorielle, et au moins la propriété texturale étant choisie dans le groupe comprenant la sensation d'onctuosité en bouche, le fondant, la sensation de dissolution rapide en bouche, la sensation d'adhérence en bouche, la sensation d'épaisseur en bouche, l'épaisseur après ingestion et la sensation grasse après ingestion.

**14.** Récipient selon la revendication 1, comprenant 7 à 15 % (p/p) d'inuline.

**15.** Procédé de préparation d'un produit de dessert multi-composant, le produit de dessert multi-composant comprenant un premier et un deuxième produit de dessert, le procédé comprenant :

 a. le mélange d'ingrédients pour obtenir une composition alimentaire comprenant :

  i) 10 à 40 % (p/p) de matière grasse,
  ii) 0,5 à 8 % (p/p) de protéine non globulaire,
  iii) 5 à 15 % (p/p) d'inuline, et
  iv) 45 à 80 % (p/p) d'eau,

 le rapport en poids de matière grasse à la protéine non globulaire étant de préférence de 5:1 à 20:1 ;
 b. le chauffage de la composition ainsi obtenue à une température entre 70 et 150° C ;
 c. le refroidissement du liquide ainsi obtenu de 0 à 35° C ;
 d. le conditionnement du premier produit de dessert ainsi obtenu à c) conjointement avec un deuxième produit de dessert dans un récipient, le deuxième produit de dessert comprenant un ou plusieurs produits de dessert choisis dans le groupe constitué d'un yaourt, un quark, un pudding, une crème, une mousse, une crème bavaroise, une composition à base de fruits, une crème fouettée et une crème fraîche.

**16.** Procédé selon la revendication 15, le procédé comprenant en outre l'homogénéisation de la composition obtenue au point (a.) et/ou du liquide obtenu au point (b.), dans lequel l'homogénéisation est réalisée à une température de 30 à 80° C et une pression d'au moins 40 bars et s'effectue de préférence en un cycle.

**17.** Procédé selon l'une des revendications 15 à 16, dans lequel le liquide est refroidi de 0 à 35° C jusqu'à ce qu'il ait une viscosité de remplissage entre 5 et 100, la viscosité de remplissage étant définie comme la viscosité du produit de dessert directement après sa préparation, et la viscosité de remplissage étant déterminée à un taux de cisaillement de 13,9 s$^{-1}$ après application d'un pré-cisaillement stable pendant 30 s à un taux de cisaillement de 13,9 s$^{-1}$ et à une température de 7° C.

18. Procédé selon l'une des revendications 15 à 17, le procédé comprenant en outre le stockage du conteneur à une température de stockage entre 0 et 35° C, jusqu'à ce que le produit de dessert ait une viscosité entre 50 et 10000 Pa.s, la viscosité étant une viscosité à cisaillement stable déterminée par rhéométrie rotationnelle en utilisant une géométrie plan-plan selon la norme DIN 53018-1 dans les conditions suivantes :

- une largeur de gap de 2 mm à un diamètre de plaque de 25 mm, et
- un taux de cisaillement de 1 s$^{-1}$ et
- une température qui est égale à la température de stockage ;

dans lequel pendant 10 s avant de déterminer la viscosité, un pré-cisaillement est appliqué à un taux de cisaillement de 1 s$^{-1}$ et à une température égale à la température de stockage.

# Figure 1

# Figure 2

Figure 3

Figure 4

**EP 2 025 246 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0928560 A
- EP 1728440 A
- EP 1570746 A
- US 2003113436 A
- EP 0970618 A
- EP 1597975 A
- EP 1348340 A
- CN 1672540
- DE 10346193
- EP 1602579 A

**Non-patent literature cited in the description**

- **P. WALSTRA ; R. JENNESS.** Dairy Chemistry and Physics. Wiley, 1984
- **BOT et al.** *Food Hydrocolloids,* 2004, vol. 18, 547-556